(19) Europäisches Patentamt European Patent Office Office européen des brevets

(11) **EP 4 116 387 A1**

(12) **EUROPEAN PATENT APPLICATION**
published in accordance with Art. 153(4) EPC

(43) Date of publication:
**11.01.2023 Bulletin 2023/02**

(21) Application number: **21765046.4**

(22) Date of filing: **02.03.2021**

(51) International Patent Classification (IPC):
*C09J 7/38* (2018.01)   *C09J 7/21* (2018.01)
*C09J 11/04* (2006.01)   *C09J 11/06* (2006.01)
*C09J 133/06* (2006.01)

(52) Cooperative Patent Classification (CPC):
**C09J 7/21; C09J 7/38; C09J 11/04; C09J 11/06;**
**C09J 11/08; C09J 133/00; C09J 133/06**

(86) International application number:
**PCT/JP2021/008016**

(87) International publication number:
**WO 2021/177322 (10.09.2021 Gazette 2021/36)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **06.03.2020 JP 2020038907**

(71) Applicant: **Nitto Denko Corporation**
**Ibaraki-shi, Osaka 567-8680 (JP)**

(72) Inventors:
• **HAMADA, Hiroyuki**
  **Ibaraki-shi, Osaka 567-8680 (JP)**
• **SUZUKI, Toshihide**
  **Ibaraki-shi, Osaka 567-8680 (JP)**
• **ISHII, Hiroyasu**
  **Ibaraki-shi, Osaka 567-8680 (JP)**

(74) Representative: **Müller-Boré & Partner**
**Patentanwälte PartG mbB**
**Friedenheimer Brücke 21**
**80639 München (DE)**

(54) **ADHESIVE SHEET**

(57)    Provided is a pressure-sensitive adhesive (PSA) sheet including a PSA layer that exhibits improved water resistance. The PSA sheet provided by the present invention includes a PSA layer formed from a water-dispersed PSA composition containing an acrylic polymer as a base polymer, a water-dispersed tackifier resin, and at least any one type of Na ions and K ions. The total amount of Na ions and K ions in the PSA sheet is 0.3 part by weight or more to 0.8 part by weight or less per 100 parts by weight of the PSA sheet.

[Fig. 1]

FIG.1

**Description**

[Technical Field]

The present invention relates to a pressure-sensitive adhesive (PSA) sheet including a PSA layer formed with a water-dispersed PSA composition. The present application claims priority to Japanese Patent Application No. 2020-38907 filed on March 6, 2020, the entire content of which is herein incorporated by reference.

[Background Art]

In terms of environmental health, a water-dispersed PSA composition containing a PSA ingredient dispersed in an aqueous medium (emulsion PSA composition containing a PSA ingredient dispersed in an aqueous medium) is preferable relative to a PSA composition containing a PSA ingredient dissolved in an organic solvent (solvent-based PSA composition). PSA sheets produced with use of water-dispersed PSA compositions has thus been used in a double-faced tape (tape adhesive on each side) or other forms in various fields. Patent Document 1 can be listed as a technical literature related to water-dispersed PSA compositions.

[Citation List]

[Patent Literature]

[Patent Document 1] Japanese Patent Application Publication No. 2017-132993

[Summary of Invention]

[Technical Problem]

To a PSA composition, a tackifier resin is sometimes added for improving peel strength or other purposes. The tackifier resin is generally water-insoluble, and thus often used in the form of a tackifier resin emulsion dispersed in water (water-dispersed tackifier resin) when applied in a water-dispersed PSA composition. However, when a water-dispersed PSA composition contains a tackifier resin emulsion, the PSA layer formed from the composition is prone to have lower water resistance (e.g., less retention of peel strength when kept under a wet-hot condition).
The present invention has been made in terms of such circumstances, and has an objective to provide a PSA sheet including a PSA layer exhibiting improved water resistance.

[Solution to Problem]

The inventors have found that, in a PSA sheet including a PSA layer, inclusion of a certain amount of Na ions and/or K ions in a water-dispersed PSA composition including an acrylic polymer as a base polymer and containing a water-dispersed tackifier resin allows exertion of an effect to significantly improve water resistance of a PSA layer formed from the PSA composition, whereby the present invention has been completed.
The description provides a PSA sheet including a PSA layer formed from a water-dispersed PSA composition. The water-dispersed PSA composition contains an acrylic polymer as a base polymer, a water-dispersed tackifier resin, and at least any one type of Na ions and K ions. The total amount of Na ions and K ions in the PSA sheet is 0.3 part by weight or more to 0.8 part by weight or less per 100 parts by weight of the PSA sheet.
As described above, a water-dispersed PSA composition including an acrylic polymer as a base polymer and containing a water-dispersed tackifier resin can contain Na ions and/or K ions so as to provide a toral content of Na ions and K ions of 0.3 part by weight or more to 0.8 part by weight or less per 100 parts by weight of the PSA sheet, thereby significantly improving water resistance of a PSA layer formed from the PSA composition.
The acrylic polymer is preferably a polymerization product (typically an emulsion polymerization product) of a monomeric starting material containing more than 50% by weight of alkyl (meth)acrylate. A water-dispersed acrylic PSA composition containing such an acrylic polymer as a base polymer facilitates production of a PSA sheet including a PSA layer that exhibits good adhesive properties.
The water-dispersed PSA composition disclosed herein preferably contains a surfactant. Use of a surfactant facilitates production of a PSA sheet including a PSA layer that exhibits improved water resistance. The water-dispersed PSA composition according to a preferred embodiment contains a reactive surfactant as the surfactant. Use of a reactive surfactant facilitates production of a PSA sheet including a PSA layer that exhibits higher water resistance.
The content of the water-dispersed tackifier resin can be, e.g., 1 part by weight or more to 70 parts by weight or less relative to 100 parts by weight of the base polymer. A water-dispersed PSA composition having such composition facilitates production of a PSA sheet including a PSA layer that preferably balances good water resistance and adhesive properties.

Another preferred embodiment of the art disclosed herein includes a tackifier resin having a softening point (Ts) of 90°C or higher as the water-dispersed tackifier resin. It can be advantageous to use a species having a high Ts as the tackifier resin in terms of cohesion of a PSA. Accordingly, a configuration including a high-Ts tackifier resin facilitates production of a PSA sheet including a PSA layer with an excellent adhesive property.

The PSA sheet according to a preferred embodiment has a 180° peel strength of 4 N/20 mm or more after attached to a stainless steel plate and stored under conditions of 60°C and 95% RH for 24 hours (hereinafter also referred to as "after wet-heated"). The PSA sheet that exhibits such peel strength after wet-heated is preferably used as a highly water-resistant PSA sheet.

In the PSA sheet according to another preferred embodiment, the 180° peel strength after attached to a stainless steel plate and stored under conditions of 60°C and 95% RH for 24 hours is 0.5 times or more of the 180° peel strength after attached to a stainless steel plate and stored under conditions of 23°C and 50% RH for 30 minutes. The PSA sheet exhibiting such a high peel strength retention rate (hereinafter also simply referred to as "retention rate") for wet-heating is preferably used as a highly water-resistant PSA sheet.

The PSA sheet according to a preferred embodiment is constructed as an adhesively double-faced PSA sheet that includes a substrate and, as the PSA layers, a first PSA layer placed on a first face of the substrate and a second PSA layer placed on a second face of the substrate. The double-faced PSA sheet in this configuration is preferably used for joining various articles and members. The PSA sheet disclosed herein can be preferably made, for example, in an embodiment where the substrate is a non-woven fabric.

[Brief Description of Drawings]

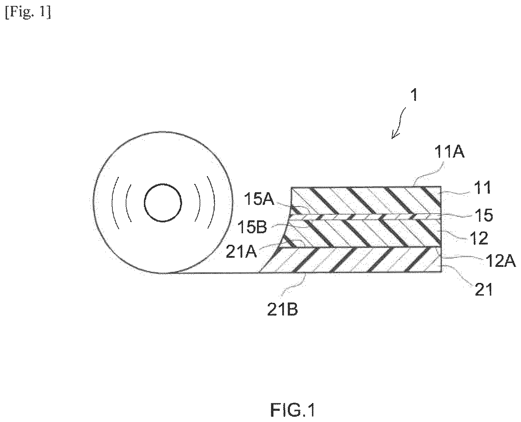

Fig. 1 shows a schematic cross-sectional view illustrating a configuration of the PSA sheet according to an embodiment.

[Description of Embodiments]

Preferred embodiments of the present invention are described below. Matters necessary to practice this invention other than those specifically referred to herein can be understood by a person skilled in the art based on teaching for practice of the invention described herein and common technical knowledge at the filing date. The present invention can be implemented based on the contents disclosed herein and common technical knowledge in the art. In the drawings below, members or sites producing the same effects may be described with a common reference numeral, and duplicated descriptions may be omitted or simplified. The embodiments described in the drawings are schematized for explicitly illustrating the present invention, and do not necessarily represent the accurate size or reduction scale of an actual product provided.

The term "PSA" as used herein refers to a material present in a soft solid (viscoelastic) state in a room temperature range and has a property to adhere to an adherend with pressure. As defined in "Adhesion: Fundamental and Practice" by C. A. Dahlquist (McLaren & Sons (1966), p. 143), the PSA referred to herein can be generally a material having a property that satisfies complex tensile modulus $E^*$ (1 Hz) $< 10^7$ dyne/cm$^2$ (typically, a material having the above-described characteristics at 25°C). The PSA in the art disclosed herein may also be acknowledged as solid contents (non-volatiles) in a PSA composition or constituents of a PSA layer.

The term "(meth)acryloyl" as used herein inclusively means acryloyl and methacryloyl. Similarly, the term "(meth)acrylate" inclusively means acrylate and methacrylate, and the term "(meth)acryl" inclusively means acryl and methacryl, respectively.

The term "acrylic polymer" as used herein refers to a polymerization product containing, as a monomer unit constituting the polymer, more than 50% by weight of monomer units derived from an acrylic monomer. The acrylic monomer refers to a monomer derived from a monomer having at least one (meth)acryloyl group per molecule.

The term "water-dispersed" as used herein means a state where components are at least partially dispersed in water. For example, the term "water-dispersed PSA composition" means a composition containing a PSA composition and water where the PSA composition is at least partially dispersed in water. The water-dispersed state also includes a suspended state and an emulsified state.

<Water-Dispersed PSA Composition>

The PSA composition disclosed herein is a water-dispersed (typically aqueous emulsion-based) PSA composition containing an adhesive ingredient dispersed in an aqueous medium. The term "aqueous medium" herein refers to a medium in which a solvent constituting the medium is water or a solvent mixture containing water as the primary component (aqueous solvent).

(Acrylic Polymer)

The PSA composition disclosed herein is an acrylic PSA composition containing an acrylic polymer as a base polymer. The term "base polymer" herein refers to the primary component among polymer components in the PSA composition (which can also be a PSA). The term "primary component" as used herein denotes a component that accounts for more than 50% by weight unless otherwise specified. In a preferred embodiment, the acrylic PSA composition is an emulsion acrylic PSA composition containing a water-dispersed acrylic polymer. The water-dispersed acrylic polymer takes an emulsion form where the acrylic polymer is dispersed in water. As such an acrylic polymer, a polymer formed from an alkyl (meth)acrylate as a primary monomer component (monomeric primary component, i.e., a constituent accounting for more than 50 % by weight of the total amount of the monomers constituting the acrylic polymer) can be preferably employed.

As the acrylic polymer, preferred is, for example, a polymerization product of a monomeric starting material (monomer ingredient) that contains an alkyl (meth)acrylate as a primary monomer and may further contain a secondary monomer copolymerizable with the primary monomer. The primary monomer herein refers to a component that accounts for more than 50% by weight of the monomer composition in the monomeric starting material.

As the alkyl (meth)acrylate, for example, a compound represented by the following formula (1) can be preferably used:

$$CH_2=C(R^1)COOR^2 \qquad (1)$$

$R^1$ in the formula (1) is a hydrogen atom or a methyl group. $R^2$ is a linear alkyl group having 1 to 20 carbon atoms (hereinafter, such a range of the number of carbon atoms may be indicated as "$C_{1-20}$"). In terms of the storage modulus of PSA and the like, an alkyl (meth)acrylate with $R^2$ being a $C_{1-14}$ linear alkyl group is preferable, an alkyl (meth)acrylate with $R^2$ being a $C_{1-10}$ linear alkyl group is more preferable, and an alkyl (meth)acrylate with $R^2$ being a butyl group or a 2-ethylhexyl group is particularly preferable.

Examples of the alkyl (meth)acrylate with $R^2$ being a $C_{1-20}$ linear alkyl group include methyl (meth)acrylate, ethyl (meth)acrylate, propyl (meth)acrylate, isopropyl (meth)acrylate, n-butyl (meth)acrylate, isobutyl (meth)acrylate, s-butyl (meth)acrylate, pentyl (meth)acrylate, isopentyl (meth)acrylate, hexyl (meth)acrylate, heptyl (meth)acrylate, 2-ethylhexyl (meth)acrylate, octyl (meth)acrylate, isooctyl (meth)acrylate, nonyl (meth)acrylate, isononyl (meth)acrylate, decyl (meth)acrylate, isodecyl (meth)acrylate, undecyl (meth)acrylate, dodecyl (meth)acrylate, tridecyl (meth)acrylate, tetradecyl (meth)acrylate, pentadecyl (meth)acrylate, hexadecyl (meth)acrylate, heptadecyl (meth)acrylate, octadecyl (meth)acrylate, nonadecyl (meth)acrylate, and eicosyl (meth)acrylate. These alkyl (meth)acrylates can be used singly as one species or in a combination of two or more species. Preferable alkyl (meth)acrylates include *n*-butyl acrylate (BA) and 2-ethylhexyl acrylate (2EHA).

The art disclosed herein can be preferably implemented in an embodiment where the monomer ingredient contains the alkyl (meth)acrylate having a $C_{4-10}$ linear alkyl group as $R^2$ in the formula (1) (typically at least either BA or 2EHA) and where the total amount of the alkyl (meth)acrylate having the $C_{4-10}$ linear alkyl group as $R^2$ in the formula (1) (typically the total amount of BA and 2EHA) accounts for 70% by weight or more (typically 80% by weight or more) of alkyl (meth)acrylate(s) in the monomer ingredient.

When the alkyl (meth)acrylate(s) contains an alkyl (meth)acrylate having a $C_{4-10}$ linear alkyl group as $R^2$ in the formula (1) (typically at least either BA or 2EHA), the total amount of the other alkyl (meth)acrylate(s) (alkyl (meth)acrylate(s) having a linear alkyl group with less than $C_4$ or more than $C_{10}$ as $R^2$ in the formula (1)) is preferably about 30% by weight or less (e.g., 20% by weight or less, typically 15% by weight or less) in a monomer ingredient constituting the acrylic polymer. Moreover, in terms of obtaining effects of the other alkyl (meth)acrylate(s), the total amount is preferably about 1% by weight or more (e.g., 5% by weight or more, typically 10% by weight or more) in the monomer ingredient. As the other alkyl (meth)acrylate, an alkyl (meth)acrylate having a $C_{1-3}$ linear alkyl group as $R^2$ in the formula (1) can be preferably used. Specific examples thereof include methyl acrylate (MA), methyl methacrylate (MMA), and ethyl acrylate (EA). Among them, MA is more preferable.

A secondary monomer copolymerizable with an alkyl (meth)acrylate that is a primary monomer may be useful for introducing crosslinking points in the acrylic polymer or increasing cohesive strength of the acrylic polymer. As the secondary monomer, for example, the following functional group-containing monomer ingredient can be used singly as one species or in a combination of two or more species.

Carboxy group-containing monomers: e.g., ethylenic unsaturated mono-carboxylic acids such as acrylic acid (AA), methacrylic acid (MAA), and crotonic acid; and ethylenic unsaturated dicarboxylic acids such as maleic acid, itaconic acid, and citraconic acid, as well as anhydrides thereof (maleic acid anhydride, itaconic acid anhydride, etc.)

Hydroxy group-containing monomers: e.g., hydroxyalkyl (meth)acrylates such as 2-hydroxyethyl (meth)acrylate, 2-hydroxypropyl (meth)acrylate, 3-hydroxypropyl (meth)acrylate, and 2-hydroxybutyl (meth)acrylate; and unsaturated alcohols such as vinyl alcohol and allyl alcohol.

Amide group-containing monomers: e.g., (meth)acrylamide, *N,N*-dimethyl(meth)acrylamide, *N*-butyl(meth)acrylamide, *N*-methylol(meth)acrylamide, *N*-methylolpropane(meth)acrylamide, *N*-methoxymethyl(meth)acrylamide, and *N*-butoxymethyl(meth)acrylamide.

Amino group-containing monomers: e.g., aminoethyl (meth)acrylate, *N,N*-dimethylaminoethyl (meth)acrylate, and *t*-butylaminoethyl (meth)acrylate.

Epoxy group-containing monomers: e.g., glycidyl (meth)acrylate, methylglycidyl (meth)acrylate, and allyl glycidyl ether.

Cyano group-containing monomers: e.g., acrylonitrile and methacrylonitrile.

Keto group-containing monomers: e.g., diacetone (meth)acrylamide, diacetone (meth)acrylate, vinyl methyl ketone, vinyl ethyl ketone, allyl acetoacetate, and vinyl acetoacetate.

Monomers having nitrogen atom-containing rings: e.g., *N*-vinyl-2-pyrrolidone, *N*-methylvinylpyrrolidone, *N*-vinylpyridine, *N*-vinylpiperidone, *N*-vinylpyrimidine, *N*-vinylpiperazine, *N*-vinylpyrazine, *N*-vinylpyrrole, *N*-vinylimidazole, *N*-vinyloxazole, *N*-vinylmorpholine, *N*-vinylcaprolactam, and *N*-(meth)acryloyl morpholine.

Alkoxysilyl group-containing monomers: e.g., 3-(meth)acryloxypropyltrimethoxysilane, 3-(meth)acryloxypropyltriethoxysilane, 3-(meth)acryloxypropylmethyldimethoxysilane, 3-(meth)acryloxypropylmethyldiethoxysilane.

The functional group-containing monomers can be used singly as one species or in a combination of two or more species. Among the functional group-containing monomers, preferable are carboxy group-containing monomers, hydroxy group-containing monomers, and cyano group-containing monomers, and more preferable is carboxy group-containing monomers, because these can preferably achieve introduction of crosslinking points and improvement in cohesive strength as described above. Among carboxy group-containing monomers, AA and MAA are preferable.

In a preferred embodiment, AA and MAA are used together as the functional group-containing monomers. The PSA composition containing an acrylic polymer having such monomer composition (i.e., copolymer composition) may produce a PSA sheet of higher performance (e.g., with greater repulsion resistance). The weight ratio of AA to MAA (AA/MAA) can be, e.g., in a range of about 0.1 to 10, and is more preferably about 0.3 or more (typically 0.5 or more) and also more preferably about 5 or less (typically 4 or less). AA/MAA within these ranges tends to provide with ease a sufficient effect to improve the repulsion resistance, and a PSA sheet thus fabricated also tends to have excellent temporal stability of adhesive properties.

In the acrylic polymer, an alkoxysilyl group-containing monomer is preferably copolymerized. The alkoxysilyl group-containing monomer is typically an ethylenic unsaturated monomer having at least one (preferably two or more, e.g., two or three) alkoxysilyl group in a molecule, and specific examples thereof are as mentioned above. The alkoxysilyl group-containing monomer can be used singly as one species or in a combination of two or more species. Copolymerizing the alkoxysilyl group-containing monomer allows introduction of a crosslinked structure generated by a condensation reaction of silanol groups (silanol condensation), in the PSA formed from the PSA composition containing the acrylic polymer.

When a functional group-containing monomer is copolymerized in the acrylic polymer, the ratio of the functional group-containing monomer to all monomer ingredients constituting the acrylic polymer is not particularly limited. Ordinarily, in terms of well balancing cohesive strength and adhesiveness, the ratio of the functional group-containing monomer is preferably about 0.1% by weight or more (e.g., 0.5% by weight or more, typically 1% by weight or more). In view of an effect of the alkyl (meth)acrylate on adhesion, the ratio is preferably about 40% by weight or less (e.g., 30% by weight or less, typically 20% by weight or less).

When a carboxy group-containing monomer is copolymerized in the acrylic polymer, the ratio of the carboxy group-containing monomers to all monomer ingredients is suitably 15% by weight or less in view of improving the water resistance, and may be, e.g., 10% by weight or less, 5% by weight or less, or 3% by weight or less. Meanwhile, in view of cohesion, etc., the ratio in some embodiments may be, e.g., 0.1% by weight or more, or 0.5% by weight or more. The art disclosed herein can achieve good water resistance even in an embodiment where the ratio of the carboxyl group-containing monomers to all monomer ingredients is 1% by weight or more, or an embodiment where it is 1.5% by weight or more.

When an alkoxysilyl group-containing monomer is copolymerized in the acrylic polymer, the ratio of the alkoxysilyl group-containing monomers to all the monomer ingredients is suitably 0.005% by weight or more (e.g., 0.01% by weight or more) of all monomer ingredients, and also suitably about 0.1% by weight or less (e.g., 0.03% by weight or less).

For increasing cohesive strength of the acrylic polymer and other purposes, other co-monomer ingredient(s) can be used other than the aforementioned secondary monomers. Examples of such co-monomer ingredients include vinyl ester-based monomers such as vinyl acetate and vinyl propionate; aromatic vinyl compounds such as styrene, substituted styrenes (α-methylstyrene, etc.), and vinyl toluene; cycloalkyl (meth)acrylates such as cyclohexyl (meth)acrylate, cyclopentyl (meth)acrylate, and isobornyl (meth)acrylate; aromatic ring-containing (meth)acrylates such as aryl (meth)acrylate (e.g., phenyl (meth)acrylate), aryloxyalkyl (meth)acrylate (e.g., phenoxyethyl (meth)acrylate), and arylalkyl (meth)acrylate (e.g., benzyl (meth)acrylate); olefinic monomers such as ethylene, propylene, isoprene, butadiene, and isobutylene; chlorine-containing monomers such as vinyl chloride and vinylidene chloride; isocyanate group-containing monomers such as 2-(meth)acryloyloxyethyl isocyanate; alkoxy group-containing monomers such as methoxyethyl (meth)acrylate and ethoxyethyl (meth)acrylate; and vinyl ether-based monomers such as methyl vinyl ether and ethyl vinyl ether.

Other examples of the co-monomer ingredients other than the secondary monomer include monomers having a plurality of functional groups in a molecule. Illustrative examples of such polyfunctional monomers include 1,6-hexanediol di(meth)acrylate, ethylene glycol di(meth)acrylate, diethylene glycol di(meth)acrylate, triethylene glycol di(meth)acrylate, tetraethylene glycol di(meth)acrylate, (poly)ethylene glycol di(meth)acrylate, propylene glycol di(meth)acrylate, (poly)propylene glycol di(meth)acrylate, neopentylglycol di(meth)acrylate, pentaerythritol di(meth)acrylate, trimethylolpropane tri(meth)acrylate, pentaerythritol tri(meth)acrylate, dipentaerythritol hexa(meth)acrylate, glycerin di(meth)acrylate, epoxy acrylate, polyester acrylate, urethane acrylate, divinylbenzene, butyl di(meth)acrylate, and hexyl di(meth)acrylate.

The amount of the co-monomer ingredient(s) other than the secondary monomer can be appropriately selected according to a purpose and intended use, and is not particularly limited, but is, for example, preferably 10% by weight or less of monomer composition of the acrylic polymer.

The acrylic polymer in the art disclosed herein is suitably designed so as to have a glass transition temperature (Tg) of -25°C or lower (typically -75°C or higher to -25°C or lower). The Tg of the acrylic polymer can be preferably -40°C or lower (e.g., -70°C or higher to -40°C or lower) and more preferably -50°C or lower (typically -70°C or higher to -50°C or lower). It is preferable that the Tg of the acrylic polymer is at or below the aforementioned upper limits in view of improving adhesive strength. The Tg of the acrylic polymer can be adjusted corresponding to the types and the amount ratio of monomers used for synthesis of the polymer.

The Tg of the acrylic polymer herein refers to the Tg determined by the Fox equation based on composition of the monomer ingredients to be used for synthesis of the polymer. The Fox equation is a relational expression between the Tg of a copolymer and the glass transition temperatures Tgi of homopolymers of the respective monomers constituting the copolymer, as follows:

$$1/Tg = \Sigma(Wi/Tgi)$$

In the Fox equation, Tg represents the glass transition temperature (unit: K) of a copolymer, Wi represents a weight fraction (copolymerization ratio by weight) of a monomer i in the copolymer, and Tgi represents glass transition temperature (unit: K) of a homopolymer of the monomer i.

As the glass transition temperatures of homopolymers used for calculating Tg, values given in a known document are used. For example, the monomers listed below employs the following values as the glass transition temperatures of homopolymers of the monomers:

| | |
|---|---|
| 2-ethylhexyl acrylate | -70°C |
| n-butyl acrylate | -55°C |
| methyl methacrylate | 105°C |
| methyl acrylate | 8°C |
| vinyl acetate | 32°C |
| acrylic acid | 106°C |
| methacrylic acid | 228°C |

For the glass transition temperature of a homopolymer of a monomer other than those listed above, a value given in "Polymer Handbook" (3rd edition, John Wiley & Sons, Inc., 1989) is used. When the literature provides several kinds of values, the highest value is employed.

For a monomers of which a homopolymer has no glass transitions temperature given even in Polymer Handbook described above, values derived by the following measurement method are used (see Japanese Patent Application Publication No. 2007-51271). In particular, to a reaction vessel equipped with a thermometer, a stirrer, a nitrogen inlet, and a reflux condenser are charged 100 parts by weight of a monomer, 0.2 part by weight of azobisisobutyronitrile, and 200 parts by weight of ethyl acetate as a polymerization solvent, and the whole is stirred for one hour under a nitrogen gas flow. After oxygen is removed in this way from the polymerization system, the mixture is heated to 63°C and reacted for 10 hours. Then, the reaction mixture is cooled to room temperature to provide a homopolymer solution having a solid contents concentration of 33% by weight. Then, this homopolymer solution is applied onto a release liner by flow coating and allowed to dry to prepare a test sample (sheet-shaped homopolymer) of about 2 mm thickness. This test sample is punched out into a disc of 7.9 mm diameter and held between parallel plates, and viscoelasticity is measured in a shear mode over a temperature range of -70°C to 150°C at a heating rate of 5°C/min along with applying a shear strain at a frequency of 1 Hz using a rheometer (ARES, manufactured by Rheometrics Scientific, Inc.); the temperature value at the maximum of the tan δ curve is taken as the Tg of the homopolymer.

The method for obtaining the acrylic polymer is not particularly limited, and various polymerization methods known as synthetic techniques for acrylic polymers can be appropriately employed, such as a solution polymerization method, an emulsion polymerization method, a bulk polymerization method, a suspension polymerization method, and a photopolymerization method. As a polymerization method that can be preferably employed, the emulsion polymerization method is exemplified. The embodiment of emulsion polymerization is not particularly limited, and can be performed by appropriately employing a variety of monomer supplying methods, polymerization conditions, materials to be used, and the like similar to those for heretofore known common emulsion polymerization. Examples of the monomer supplying methods to be appropriately employed can include an all-at-once supply method where all amount of a monomeric starting material is supplied at a time, a continuous (dropwise) supply method, and a divided (dropwise) supply method. A monomeric starting material may be added dropwise as an aqueous emulsion. The polymerization temperature can be, e.g., about 20°C or higher (usually 40°C or higher), and is suitably about 100°C or lower (usually 80°C or lower).

The emulsion polymerization allows preparation of a polymerization liquid in an emulsion form of the acrylic polymer dispersed in water (acrylic polymer emulsion). The water-dispersed PSA composition disclosed herein may be preferably produced using the polymerization liquid or a suitable work-up thereof. Alternatively, the acrylic polymer emulsion may be prepared by using a polymerization method other than an emulsion polymerization method (e.g., solution polymerization, photopolymerization, and bulk polymerization) to synthesize the acrylic polymer, and then dispersing the polymer in water.

The initiator used for the polymerization can be appropriately selected corresponding to the type of a polymerization method among heretofore known polymerization initiators. Examples include, but not limited to, azo-based initiators such as 2,2'-azobisisobutyronitrile, 2,2'-azobis(2-methylpropionamidine) disulfate salt, 2,2'-azobis(2-methylpropionamidine) dihydrochloride salt, 2,2'-azobis(2-amidinopropane) dihydrochloride salt, 2,2'-azobis[N-(2-carboxyethyl)-2-methylpropionamidine] hydrate, 2,2'-azobis(N,N'-dimethylene isobutylamidine), and 2,2'-azobis[2-(2-imidazolin-2-yl)propane] dihydrochloride salt; persulfate salt-based initiators such as potassium persulfate and ammonium persulfate; peroxide-based initiators such as benzoyl peroxide, t-butyl hydroperoxide, and hydrogen peroxide; substituted ethane-based initiators such as phenyl-substituted ethane; carbonyl-based initiators such as aromatic carbonyl compounds; redox-based initiators such as a combination of a persulfate salt and sodium hydrogen sulfite and a combination of a peroxide and sodium ascorbate. These polymerization initiators can be used singly as one species or in a combination of two or more species.

The amount of the polymerization initiator just has to be a usual amount and is not particularly limited. For example, the amount can be selected from a range of about 0.005 by weight or more (preferably 0.01 part by weight or more) and of 1 part by weight or less (preferably 0.8 part by weight or less) relative to 100 parts by weight of all monomer ingredients.

In the polymerization, a chain transfer agent (which may also be acknowledged as a molecular weight modifier or a regulator of polymerization degree) can be used as necessary. Examples of the chain transfer agent include mercaptans such as dodecyl mercaptan (dodecanethiol), lauryl mercaptan, glycidyl mercaptan, 2-mercaptoethanol, mercaptoacetic acid, 2-ethylhexyl thioglycolate and 2,3-dimethylcapto-1-propanol; as well as α-methyl styrene dimer. Such chain transfer agents can be used singly or in a combination of two or more species.

To 100 parts by weight of the monomer ingredients, the chain transfer agent can be used in an amount of about 0.001 part by weight or more (typically about 0.005 part by weight or more, e.g., about 0.001 part by weight or more), and also used in an amount of, e.g., about 5 parts by weight or less (typically about 2 parts by weight or less, e.g., about 1 part by weight or less). Use of an amount of the chain transfer agent in an appropriate range allows providing a desired polymerization rate.

Emulsion polymerization of a monomeric starting material is commonly performed in the presence of a surfactant (emulsifier). The amount of the surfactant is not particularly limited. In view of the polymerization stability and dispersion stability of a polymerization reactant, the amount of the surfactant is usually, suitably 0.1 part by weight or more, and preferably 0.5 part by weight or more relative to 100 parts by weight of a monomeric starting material. In terms of providing higher stability, it may be 1.0 part by weight or more, or 1.5 parts by weight or more. The surfactant can also be used in an amount of, e.g., 10 parts by weight or less relative to 100 parts by weight of a monomeric starting material. Meanwhile, in terms of improving water resistance, it is desirable to reduce the amount of the surfactant (especially non-reactive surfactant). From such a standpoint, the amount of the surfactant is usually, preferably 5 parts by weight or less, and may also be 4 parts by weight or less, 3 parts by weight or less, or 2.5 parts by weight or less.

As the surfactant, known anionic surfactants, nonionic surfactants, cationic surfactants and the like can be used. Ordinarily, an anionic or nonionic surfactant is preferable. A surfactant having a reactive functional group (typically, a radically-polymerizable functional group) may also be used. Hereinafter, a surfactant having a reactive functional group may be referred to as a reactive surfactant, while a common surfactant free of a reactive functional group may be referred to as a non-reactive surfactant. The surfactant can be used singly as one species or in a combination of two or more species.

Examples of non-reactive anionic surfactants include alkyl sulfates such as lauryl sulfate and octadecyl sulfate; fatty acid salts; alkyl benzene sulfonates such as nonyl benzene sulfonate and dodecyl benzene sulfonate; naphthalene sulfonates such as dodecylnaphthalene sulfonate; alkyl diphenyl ether disulfonate such as dodecyl diphenyl ether disulfonate; polyoxyethylene alkyl ether sulfates such as polyoxyethylene octadecyl ether sulfate and polyoxyethylene lauryl ether sulfate; polyoxyethylene alkyl phenyl ether sulfates such as polyoxyehtylene lauryl phenyl ether sulfate; polyoxyethylene styrenated phenyl ether sulfate; sulfosuccinates such as lauryl sulfosuccinate and polyoxyethylene lauryl sulfosuccinate; polyoxyethylene alkyl ether phosphates; and polyoxyethylene alkyl ether acetates. When an anionic surfactant is in a salt form, the salt can be, e.g., a metal salt (preferably a monovalent metal salt) such as a sodium salt, a potassium salt, a calcium salt, or a magnesium salt; an ammonium salt; or an amine salt.

Examples of non-reactive nonionic surfactants include polyoxyethylene alkyl ethers such as polyoxyethylene lauryl ether and polyoxyethylene stearyl ether; polyoxyethylene alkyl phenyl ethers such as polyoxyethylene octyl phenyl ether and polyoxyethylene nonyl phenyl ether; sorbitan fatty acid esters such as sorbitan monolaurate, sorbitan monostearate, and polyoxyethylene sorbitan monolaurate; polyoxyethylene glyceryl ether fatty acid esters; and polyoxyethylene-polyoxypropylene block copolymers.

As the reactive surfactant, a species having a polymerizable (typically, radically-polymerizable) functional group can be preferably employed. For example, a reactive surfactant can be used having a structure where a radically-polymerizable functional group is introduced into the aforementioned anionic surfactant or nonionic surfactant. The type of the radically-polymerizable functional group is not particularly limited, and may be, e.g., an alkenyl group, an acryloyl group, a methacryloyl group, a vinyl group, a vinyl ether group (vinyloxy group), or an allyl ether group (allyloxy group). Specific examples of the alkenyl group include a propenyl group and an isopropenyl group ($CH_2=C(CH_3)-$). The concept of the propenyl group referred to herein encompasses a 1-propenyl group ($CH_3-CH=CH-$) and a 2-propenyl group ($CH_2=CH-CH_2-$; also sometimes referred to as an allyl group).

Examples of anionic reactive surfactants include polyoxyethylene (allyloxymethyl) alkyl ether sulfates (e.g., ammonium salts), polyoxyethylene nonyl propenyl phenyl ether sulfates (e.g., ammonium salts), alkyl allyl sulfosuccinates (e.g., sodium salts), methacryloxy polyoxypropylene sulfuric acid ester salts (e.g., sodium salts), and polyoxyalkylene alkenyl ether sulfates (e.g., an ammonium salt having an isopropenyl group as the terminal end of the alkenyl group). When an anionic reactive surfactant is in the form of a salt, the salt can be, e.g., a metal salt such as a sodium salt or a non-metal salt such as an ammonium salt and an amine salt.

Examples of nonionic reactive surfactants include polyoxyethylene nonyl propenyl phenyl ether.

Commercially available products of the reactive surfactants include trade names AQUALON HS-05, AQUALON HS-10, AQUALON HS-1025, AQUALON HS-20, AQUALON KH-10, AQUALON KH-1025, AQUALON KH-05, AQUALON BC-0515, AQUALON BC-10, AQUALON BC-1025, AQUALON BC-20, AQUALON BC-2020, AQUALON RN-20, AQUALON RN-30, AQUALON RN-50, AQUALON AR-10, AQUALON AR-20, AQUALON AR-1025 and AQUALON AR-2020 manufactured by DKS Co., Ltd.; trade names ADEKA REASOAP SE-10N and ADEKA REASOAP SR-1025 manufactured by ADEKA Corporation; trade names LATEMULE PD-104, LATEMULE PD-420, LATEMULE PD-430 and LATEMULE PD-450 manufactured by Kao Corporation; trade names ELEMINOL JS-20 and ELEMINOL RS-3000 manufactured by Sanyo Chemical Industries, Ltd.; and trade name ANTOX MS-60 manufactured by Nippon Nyukazai Co., Ltd.

In terms of emulsification properties and the like, in an embodiment, an anionic reactive surfactant can be preferably employed.

When a nonionic reactive surfactant is used, combination use with other surfactant(s) such as an anionic reactive surfactant, an anionic non-reactive surfactant, or a nonionic non-reactive surfactant may achieve more favorable results.

The surfactant used in the art disclosed herein preferably contains a reactive surfactant in terms of improving water resistance. In other words, at least a part of the surfactant used is preferably a reactive surfactant. Emulsion polymerization of a monomeric starting material in the presence of a reactive surfactant may cause the reactive surfactant to react to be incorporated in the acrylic polymer. Incorporation of a reactive surfactant in the acrylic polymer reduces a free surfactant. This can improve water resistance. Accordingly, polymerization with use of a reactive surfactant can be advantageous for balancing polymerization stability and water resistance of a PSA layer obtained from a post-polymerization, acrylic polymer-containing PSA composition. In terms of achieving more excellent water resistance, the ratio of a reactive surfactant in the total weight of a surfactant used in emulsion polymerization can be 50% by weight or more, and more preferably 70% by weight or more; for example, an embodiment using solely a reactive surfactant as the surfactant may be preferably employed. The reactive surfactant incorporated in the acrylic polymer is restricted in its migration in the PSA layer and thus less likely to bleed out to the surface of the PSA layer. This may also preferably contribute to improving water resistance. Note that the concept of containing a reactive surfactant herein encompasses containing the reactive surfactant with its reactive functional group (e.g., radically-polymerizable functional group) in a reacted form. The reactive surfactant in the art disclosed herein typically takes a form with at least some molecules incorporated in the acrylic polymer as described above, and is included in a water-dispersed PSA composition or a PSA layer.

The weight average molecular weight (Mw) of the acrylic polymer is not particularly limited, and may be, e.g., in a range of $10 \times 10^4$ to $500 \times 10^4$. Herein the Mw of the acrylic polymer refers to the Mw of a toluene-soluble component (a sol component) of the acrylic polymer. The Mw of the acrylic polymer refers to a value based on standard polystyrene derived from GPC (gel permeation chromatography). In terms of improving adhesive properties, the Mw of the acrylic polymer may be preferably $150 \times 10^4$ or less, and more preferably $100 \times 10^4$ or less. In terms of cohesion and the like, the Mw of the acrylic polymer may be preferably $20 \times 10^4$ or more, and more preferably $30 \times 10^4$ or more (e.g., $40 \times 10^4$ or more).

(Tackifier Resin)

The water-dispersed PSA composition disclosed herein contains a tackifier resin. This provides a PSA sheet exhibiting excellent adhesive properties (e.g., adhesive strength, repulsion resistance).

The tackifier resin is a water-dispersed tackifier resin (also referred to as tackifier resin emulsion). That is, the water-dispersed PSA composition disclosed herein contains a tackifier resin in an emulsion form of the tackifier resin dispersed in water. For example, an aqueous emulsion of the acrylic polymer and an emulsion of the tackifier resin can be mixed, thereby easily preparing a PSA composition containing these components at a desired ratio. A preferable tackifier resin emulsion used is essentially free of at least aromatic hydrocarbon-based solvents (more preferably, essentially free of aromatic hydrocarbon-based solvents and other organic solvents).

Examples of the tackifier resin include rosin-based tackifier resins (including rosin derivative tackifier resins), petroleum-based tackifier resins, terpene-based tackifier resins, phenolic tackifier resins and ketone-based tackifier resins. These can be used singly as one species or in a combination of two or more species.

Examples of the rosin-based tackifier resin include rosins such as gum rosin, wood rosin, and tall oil rosin as well as stabilized rosins (e.g., stabilized rosins derived by disproportionation or hydrogenation of the rosins), polymerized rosins (e.g., multimers, typically dimers, of the rosins), and modified rosins (e.g., unsaturated acid-modified rosins derived by modification with an unsaturated acid such as maleic acid, fumaric acid or (meth)acrylic acid).

Examples of the rosin derivative tackifier resin include esterification products of the rosin-based resins (e.g., rosin esters such as stabilized rosin esters and polymerized rosin esters), phenol modification products of the rosin-based resins (phenol-modified rosins), and esterification products thereof (phenol-modified rosin esters).

Examples of the petroleum-based tackifier resin include aliphatic petroleum resins, aromatic petroleum resins, copolymeric petroleum resins, alicyclic petroleum resins, and hydrogenation products thereof.

Examples of the terpene-based tackifier resin include α-pinene resins, β-pinene resins, aromatic group-modified terpene-based resins, and terpene-phenolic resins.

Examples of the ketone-based tackifier resin include ketone-based resins resulting from condensation of ketones (e.g., aliphatic ketones such as methyl ethyl ketone, methyl isobutyl ketone, and acetophenone; alicyclic ketones such as cyclohexanone and methyl cyclohexanone) with formaldehyde.

Examples of the tackifier resin that can be preferably used in the art disclosed herein include rosin-based tackifier resins and terpene-based tackifier resins. Preferable examples of rosin-based tackifier resins include stabilized rosin esters and polymerized rosin esters. Preferable examples of terpene-based tackifier resins include terpene-phenol-based resins.

Such a tackifier resin emulsion may be prepared, using a surfactant (emulsifier) as necessary. As a surfactant that can be used in preparation of the tackifier resin emulsion, one species or two or more species can be appropriately selected and used from surfactants similar to those usable in preparation of the acrylic polymer emulsion. Ordinarily, an anionic surfactant or nonionic surfactant is preferably used. The surfactant used for preparing the acrylic polymer emulsion can be the same as or different from the surfactant used for preparing the tackifier resin emulsion. For example, preferably employed are an embodiment using an anionic surfactant in each emulsion preparation, an embodiment using a nonionic surfactant in each preparation, and an embodiment using an anionic surfactant in one and a nonionic surfactant in the other. The amount of a surfactant is not particularly limited as long as the tackifier resin can be prepared as an emulsion, and can be, e.g., about 0.2 part by weight or more (preferably 0.5 part by weight or more) and about 10 parts by weight or less (preferably 5 parts by weight or less) relative to 100 parts by weight of the tackifier resin (solid content basis).

The softening point (Ts) of the tackifier resin used is not particularly limited. In terms of improved cohesion and the like, the Ts of the tackifier resin may be, e.g., 80°C or higher, preferably 90°C or higher, also 100°C or higher, 120°C or higher, or 130°C or higher.

In some embodiments, the tackifier resin in the art disclosed herein may contain a high-Ts tackifier resin having a Ts of 140°C or higher, with no particular limitation. The Ts of the high-Ts tackifier resin is preferably 145°C or higher, and may be e.g., 150°C or higher, 155°C or higher, 160°C or higher, or 165 °C or higher. Use of the high-Ts tackifier resin can preferably balance adhesion and cohesion. The upper limit of the Ts of the tackifier resin is not particularly limited, but is usually suitably 200°C or lower, preferably 180°C or lower, or possibly 175°C or lower in terms of compatibility, low-temperature properties, or the like.

The softening point of the tackifier resin as referred to herein is defined as a value measured based on the softening point test method (ring and ball method) specified in JIS K5902 and JIS K2207. In particular, a sample is quickly melted at a lowest possible temperature, and filled into a ring placed on top of a flat metal plate with caution to avoid bubble formation. After cooled, a portion risen above the plane including the upper rim of the ring is cut off with a small knife somewhat heated. Subsequently, a support (ring support) is placed in a glass container (heating bath) having a diameter of 85 mm or more and a height of 127 mm or more, and glycerin is poured to a depth of 90 mm or deeper. Then, a steel ball (9.5 mm diameter, 3.5 g weight) and the ring filled with the sample are immersed in the glycerin with avoiding their mutual contact. The temperature of glycerin is maintained at 20°C ± 5°C for 15 minutes. The steel ball is then placed on the center of the surface of the sample in the ring, and positioned at a prescribed location on the support. Then with keeping the distance between the ring top end and the glycerin surface at 50 mm, a thermometer is placed with the center of the mercury ball of the thermometer being as high as the center of the ring, and the container is heated. A Bunsen burner flame used for heating is positioned so as to contact with the midpoint between the center and the rim of the bottom of the container, thereby evenly heating. After the temperature has reached 40 °C from the start of heating, the rate of the bath temperature rise must be kept at 5.0°C ± 0.5°C per minute. As the sample gradually softens, flows out of the ring and finally touches the bottom plate, a temperature is read as the softening point. Two or more measurements of softening point are performed at the same time, and their average value is used.

The amount (solid content basis) of the tackifier resin is usually, suitably 1 part by weight or more in terms of exerting a preferred effect of use thereof, and is preferably 3 parts by weight or more (e.g., 5 parts by weight or more), more preferably 12 parts by weight or more, and yet more preferably 16 parts by weight or more relative to 100 parts by weight of the acrylic polymer. The art disclosed herein can achieve good water resistance even in an embodiment containing 22 parts or more (e.g., 25 parts or more) by weight of the tackifier resin relative to 100 parts by weight of the acrylic polymer. In terms of cohesive strength and the like, the amount of the tackifier resin used is usually, suitably 90 parts by weight or less, preferably 70 parts by weight or less, more preferably 55 parts by weight or less, and yet more preferably 50 parts by weight or less (e.g., 45 parts by weight or less, typically 40 parts by weight or less) relative to 100 parts by weight of the acrylic polymer.

When the water-dispersed PSA composition disclosed herein contains a high-Ts tackifier resin, the high-Ts tackifier resin may be used alone as a tackifier resin in terms of cohesive strength and the like. In terms of balancing with various other adhesive properties, in some embodiments, a high-Ts tackifier resin can be used in combination with a tackifier resin having a lower Ts (e.g., a tackifier resin with a Ts of 120°C or lower or 110°C or lower). In such an embodiment, the ratio of a high-Ts tackifier resin in the entire tackifier resins used may be, e.g., 20% by weight or more, 40% by weight or more, or 60% by weight or more. The ratio of the high-Ts tackifier resin may be, e.g., 90% by weight or less, 80% by weight or less, or 70% by weight or less.

(Alkali Metal Ion)

The water-dispersed PSA composition disclosed herein contains alkali metal ions. Inclusion of alkali metal ions in a water-dispersed acrylic PSA composition containing a water-dispersed tackifier resin can improve water resistance of a PSA layer formed from the water-dispersed PSA composition. In a preferred embodiment, alkali metal ions in the water-dispersed PSA composition are at least any one type of Na ions and K ions. Inclusion of a certain amount of Na ions and/or K ions in a water-dispersed acrylic PSA composition containing a water-dispersed tackifier resin can effectively improve water resistance of a PSA layer formed from the composition, with controlling aggregation of the composition.

A method for containing alkali metal ions in the water-dispersed PSA composition disclosed herein is not particularly limited. For example, addition of a hydroxide, a hydrochloride, a sulfate, or the like of alkali metal to the water-dispersed PSA composition allows the water-dispersed PSA composition to contain alkali metal ions. In terms of controlling aggregation of the water-dispersed PSA composition, an alkali metal hydroxide is preferably added to the water-dispersed PSA composition. In a preferred embodiment disclosed herein, the water-dispersed PSA composition contains sodium hydroxide and/or potassium hydroxide.

The amount of alkali metal ions in the water-dispersed PSA composition (represented by the total amount of alkali metal ions, when the water-dispersed PSA composition contains two or more types of alkali metal ions) is not particularly limited. In terms of improving water resistance of a PSA layer, the amount of alkali metal ions in the water-dispersed PSA composition is preferably 0.001 part by weight or more (e.g., 0.002 part by weight or more), more preferably 0.005 part by weight or more, yet more preferably 0.01 part by weight or more, and particularly preferably 0.03 part by weight or more, relative to 100 parts by weight of a base polymer. In terms of further improving water resistance to control reduction of peel strength due to wet-heating, the amount of alkali metal ions in the water-dispersed PSA composition is preferably 0.04 part by weight or more, and more preferably 0.05 part by weight or more, relative to 100 parts by weight of a base polymer. In terms of controlling aggregation of the water-dispersed PSA composition, controlling corrosion of a metal adherend, and the like, the amount of alkali metal ions in the water-dispersed PSA composition is preferably 1 part by weight or less (e.g., 0.5 part by weight or less), more preferably 0.3 part by weight or less, and yet preferably 0.2 part by weight or less, relative to 100 parts by weight of a base polymer.

The content of alkali metal ions in a PSA sheet (represented by the total content of alkali metal ions, when the PSA sheet contains two or more types of alkali metal ions) is not particularly limited. In terms of improving water resistance of a PSA layer, the content of alkali metal ions per 100 parts by weight of a PSA sheet is preferably 0.1 part by weight or more (e.g., 0.2 part by weight or more), more preferably 0.3 part by weight or more, yet more preferably 0.35 part by weight or more, and particularly preferably 0.4 part by weight or more. In terms of further improving water resistance to control reduction of peel strength due to wet-heating, the total content of alkali metal ions in a PSA sheet is preferably 0.5 part by weight or more, more preferably 0.6 part by weight or more, and yet more preferably 0.65 part by weight or more per 100 parts by weight of a PSA sheet. In terms of controlling aggregation of the water-dispersed PSA composition, controlling corrosion of a metal adherend, and the like, the content of alkali metal ions in a PSA sheet is preferably 2 parts by weight or less (e.g., 1.5 parts by weight or lower), more preferably 1 part by weight or less, and yet more preferably 0.8 part by weight or less per 100 parts by weight of a PSA sheet.

Herein, when a PSA sheet providing a basis for the content of the alkali metal ions has a configuration including a substrate and a PSA layer, the PSA sheet does include a PSA layer and a substrate, but not a release liner. When the PSA sheet is a PSA sheet without substrate, the PSA sheet includes only a PSA layer, but not a release liner. The content of alkali metal ions in the PSA sheet is measured by the method described later in Examples.

(Crosslinking Agent)

The water-dispersed PSA composition used for forming a PSA layer preferably contains a crosslinking agent as an optional ingredient. The PSA layer in the art disclosed herein may contain the crosslinking agent in a post-crosslinking-reaction form, in a pre-crosslinking-reaction form, in a partially crosslinked form, in an intermediate or combined form thereof, or the like. In typical, the crosslinking agent is included in the PSA layer mostly in a post-crosslinking-reaction form.

The type of the crosslinking agent is not particularly limited, and a suitable species can be selected and used among, e.g., isocyanate-based crosslinking agents, epoxy-based crosslinking agents, oxazoline-based crosslinking agents, aziridine-based crosslinking agents, melamine-based crosslinking agents, peroxide-based crosslinking agents, urea-based crosslinking agents, metal alkoxide-based crosslinking agents, metal chelate-based crosslinking agents, metal salt-based crosslinking agents, carbodiimide-based crosslinking agents, hydrazine-based crosslinking agents, and amine-based crosslinking agents. Either an oil-soluble crosslinking agent or a water-soluble crosslinking agent may be applicable as the crosslinking agent to be used here. The crosslinking agent can be used singly or in a combination of two or more species. The amount of the crosslinking agent is not particularly limited, and for example, suitably about 10 parts by weight or less (e.g., about 0.005 to 10 parts by weight), and preferably about 5 parts by weight or less (e.g., about 0.01 to 5 parts by weight) relative to 100 parts by weight of the acrylic polymer.

(Other Additives)

In terms of easy separation from a release liner, the water-dispersed PSA composition disclosed herein preferably contains a silicon compound (typically a silane coupling agent). As the silicon compound, one species or two or more species can be used among alkylalkoxysilane compounds, vinyl group-containing silane compounds, epoxy group-containing silane compounds, styryl group-containing silane compounds, (meth)acryloyl group-containing silane compounds, amino group-containing silane compounds, ureido group-containing silane compounds, mercapto group-containing silane compounds, isocyanate group-containing silane compounds, silyl group-containing sulfides, and the like. Among them, alkylalkoxysilane compounds are preferable. The molecular weight of the silicon compound is suitably about 100 or more (e.g., 200 or more), and may also be about 500 or less (e.g., 350 or less).

As the alkylalkoxysilane compounds, any of alkyltrialkoxysilane, dialkyldialkoxysilane, trialkylmonoalkoxysilane, tetraalkoxysilane and phenylalkoxysilane can be used. The alkyl encompasses linear and cyclic. Specific examples of the compounds include methyltrimethoxysilane, ethyltrimethoxysilane, n-propyltrimethoxysilane, n-butyltrimethoxysilane, isobutyltrimethoxysilane, n-hexyltrimethoxysilane, n-octyltrimethoxysilane, n-decyltrimethoxysilane, hexadecyltrimethoxysilane, methyltriethoxysilane, dimethoxydimethylsilane, diethoxydimethylsilane, cyclohexylmethyldimethoxysilane, methoxytrimethylsilane, octadecyldimethylmethoxysilane, phenyltrimethoxysilane, phenyltriethoxysilane, dimethoxydiphenylsilane, diphenylethoxymethylsilane, and dimethoxymethylphenylsilane. Among them, alkyltrialkoxysilane is preferable.

The content of the silicon compound is preferably 0.005 part by weight or more (e.g., 0.01 part by weight or more, typically 0.03 part by weight or more) relative to 100 parts by weight of the acrylic polymer, in terms of exerting a sufficient effect of addition thereof. Furthermore, in terms of the storage stability, the content of the silicon compound is preferably less than 1.0 part by weight (e.g., 0.5 part by weight or less, typically 0.3 part by weight or less) relative to 100 parts by weight of the acrylic polymer.

If necessary, the PSA composition disclosed herein may contain an acid or base (aqueous ammonia, etc.) used for a purpose such as pH adjustment. Examples of other optional ingredients that may be added in the PSA composition disclosed herein include viscosity modifiers, leveling agents, crosslinking-aiding agents, release modifiers, plasticizers, softeners, fillers, colorants (pigments, dyes, etc.), antistatic agents, anti-aging agents, ultraviolet absorbers, antioxidants, and light stabilizers. With respect to these various additives, heretofore known species can be used by typical methods, and the present invention is not characterized therewith; further details are thus omitted.

<PSA Sheet>

(Examples of Configuration of PSA Sheet)

The PSA sheet disclosed herein has a PSA layer formed with use of the water-dispersed PSA composition. The PSA sheet may be a PSA sheet with substrate having such a PSA layer on one or each face of a substrate (support), or a PSA sheet without substrate in which the PSA layer is held on a release liner (which may also be acknowledged as a substrate having a release face). The concept of the PSA sheet as referred to herein may encompass so-called a PSA tape, a PSA label, a PSA film, and the like. The PSA layer is typically formed continuously, but is not limited to such a form, and may be a PSA layer formed in a regular or random pattern of e.g., dots or stripes. The PSA sheet may be in a roll form or a flat sheet form. Alternatively, the PSA sheet may be further processed into any of various shapes.

The PSA sheet disclosed herein may be, for example, in a form of a double-faced PSA sheet having a cross-sectional structure schematically illustrated in Fig. 1. A double-faced PSA sheet 1 illustrated therein includes a substrate 15, and a first PSA layer 11 and a second PSA layer 12 supported by the two respective faces of the substrate 15. More specifically, the first PSA layer 11 and the second PSA layer 12 are disposed on a first face 15A and a second face 15B (each non-releasable) of the substrate 15, respectively. As shown in Fig. 1, the double-faced PSA sheet 1 prior to use (before attached to an adherend) may be overlaid on and spirally wound with a release liner 21 having a front face 21A and a back face 21B, both of which are releasable faces. In the double-faced PSA sheet 1 having such a form, the surface of the second PSA layer 12 (second adhesive face 12A) and the surface of the first PSA layer 11 (first adhesive face 11A) are protected with the front face 21A and the back face 21B of the release liner 21, respectively. Alternatively, the first adhesive face 11A and the second adhesive face 12A may be respectively protected with two separate release liners.

(Properties of PSA Sheet)

The adhesive strength of the PSA sheet disclosed herein (typically a double-faced PSA sheet) is not particularly limited. The PSA sheet according to a preferred embodiment may have a 180° peel strength (to-SUS plate peel strength) of e.g., 5 N/20 mm or more after attached to a stainless steel plate and stored under conditions of 23°C and 50% RH for 30 minutes. Hereinafter, the to-SUS plate peel strength after stored under conditions of 23°C and 50% RH for 30 minutes may also be referred to as "initial peel strength S0." The PSA sheet exhibiting such a property is preferably used as a highly adhesive PSA sheet to firmly fasten articles and members. The initial peel strength S0 is more preferably 10 N/20 mm or more, and yet more preferably 12 N/20 mm or more (e.g., 14 N/20 mm or more, and even 15 N/20 mm or more). When the PSA sheet disclosed herein is a double-faced PSA sheet, it is preferable that each adhesive face exhibit such peel strength.

The art disclosed herein can generate a PSA sheet with improved water resistance. The PSA sheet according to a preferred embodiment has a 180° peel strength (to-SUS plate peel strength) of, e.g., 4 N/20 mm or more after attached to a stainless steel plate and stored under conditions of 60°C and 95% RH (hereinafter also referred to as under wet-heating conditions) for 24 hours. Hereinafter, the to-SUS plate peel strength after stored under wet-heating conditions for 24 hours may also be referred to as the "post-wet-heating peel strength Sw." The PSA sheet showing such a property can achieve highly reliable joining even in a humid environment (typically in a hot and humid environment). Thus, the PSA sheet can be preferably used as having high bonding reliability. For example, the PSA sheet can be preferably used as exhibiting highly reliable adhesion even under an environment that may increase in humidity (e.g., under an environment that may be exposed to an atmosphere with changing humidity). The post-wet-heating peel strength Sw is more preferably 5 N/20 mm or more, and yet more preferably 8 N/20 mm or more (e.g., 10 N/20 mm or more, or even 11 N/20 mm or more). When the PSA sheet disclosed herein is a double-faced PSA sheet, each adhesive face preferably exhibits the aforementioned peel strength.

The initial peel strength S0 and the post-wet-heating peel strength Sw are measured by the method described later in Examples.

In the PSA sheet disclosed herein, the retention rate provided as the ratio of the post-wet-heating peel strength Sw to the initial peel strength S0 is not particularly limited. The retention rate (Sw/S0) may be e.g., 0.25 or more. In some embodiments, the retention rate (Sw/S0) is preferably 0.3 or more, more preferably 0.4 or more, and yet more preferably 0.5 or more, and particularly preferably 0.6 or more (e.g., 0.65 or more). In some preferred embodiments, the retention rate (Sw/S0) may be 0.7 or more, 0.8 or more, or 0.9 or more. The upper limit of the retention rate (Sw/S0) is not particularly limited.

The overall thickness of the PSA sheet disclosed herein is not particularly limited. For example, the PSA sheet may have an overall thickness of 1 mm or less (e.g., 500 $\mu$m or less). The overall thickness of the PSA sheet herein refers to the combined thickness of a substrate and a PSA layer. In a preferred embodiment, the overall thickness may be 300 $\mu$m or less (more preferably 200 $\mu$m or less). The lower limit of the overall thickness of the PSA sheet can be, e.g., 30 $\mu$m or more, and is usually, suitably 50 $\mu$m or more, preferably 70 $\mu$m or more, and more preferably 100 $\mu$m or more (e.g., 120 $\mu$m or more).

<PSA Layer>

The PSA layer in the art disclosed herein can be preferably formed by providing the aqueous PSA composition as described above to a given surface followed by drying or curing. In providing (typically applying) the PSA composition, a conventional coater (e.g., a gravure roll coater, a reverse roll coater, a kiss roll coater, a dip roll coater, a bar coater, a knife coater, or a spray coater) can be used. The thickness of the PSA layer is not particularly limited, and is usually, suitably about 2 $\mu$m or more, preferably about 5 $\mu$m or more, more preferably 10 $\mu$m or more, and yet more preferably 20 $\mu$m or more (typically 30 $\mu$m or more, e.g., 50 $\mu$m or more). The thickness of the PSA layer is usually, suitably about 200 $\mu$m or less, and preferably about 120 $\mu$m or less (e.g., 100 $\mu$m or less, typically 80 $\mu$m or less).

<Substrate>

In the PSA sheet disclosed herein, examples of a substrate used to support (back) the PSA layer can include plastic films such as polyolefin (polyethylene, polypropylene, and ethylene-propylene copolymer, etc.) films, polyester (polyethylene terephthalate, etc.) films, vinyl chloride-based resin films, vinyl acetate-based resin films, polyimide-based resin films, polyamide-based resin films, fluororesin films, and cellophane; paper such as Japanese paper, kraft paper, glassine, woodfree paper, synthetic paper, and top-coated paper; woven or nonwoven fabrics composed of any of various types of fibrous substances, either singly or as a blend; rubber sheets made of natural rubber, butyl rubber, or the like; foam sheets made of foam such as expanded polyurethane or expanded polychloroprene rubber; metal foils such as aluminum foils and copper foils; or a composite thereof. The plastic film may be of a non-stretched type or a stretched type (monoaxially stretched or biaxially stretched type). The substrate may be in a single layer form, or may be in a laminated form.

As the substrate according to a preferred embodiment, a nonwoven fabric substrate is used. Any species can be used among, e.g., nonwoven fabrics formed of natural fibers such as wood pulp, cotton, or hemp (e.g., Manila hemp); nonwoven fabrics formed of chemical fiber (synthetic fiber) such as polyester fiber, rayon, vinylon, acetate fiber, polyvinyl alcohol (PVA) fiber, polyamide fiber, polyolefin fiber, or polyurethane fiber; and nonwoven fabrics formed of combined two or more fiber species different in material. Among them, a nonwoven fabric substrate formed of hemp (e.g., Manila hemp) is preferable. In this case, the amount of hemp in the nonwoven fabric is preferably 90 % by weight or more, and more preferably 95 % by weight or more. In particular, a nonwoven fabric essentially made solely of hemp is preferably used.

In use of a nonwoven fabric as the substrate, a nonwoven fabric having a grammage of about 10 g/m$^2$ or more (e.g., 13 g/m$^2$ or more) and about 25 g/m$^2$ or less (e.g., 22 g/m$^2$ or less) can preferably be used. The nonwoven fabric preferably has a bulk density (which can be calculated by dividing the grammage by the thickness) in a range of about 0.25 g/cm$^3$ to 0.50 g/cm$^3$. The nonwoven fabric has preferably a tensile strength of 8 N/15 mm or more in both the machine direction (MD) and the transverse direction (TD), more preferably an MD tensile strength of at least 12 N/15 mm or more (e.g., 18 N/15 mm or more, and even 24 N/15 mm or more), and yet more preferably a tensile strength of about 12 N/15 mm or more (e.g., 16 N/15 mm or more) in both MD and TD. A nonwoven fabric satisfying such a tensile strength is suitable for constituting a PSA sheet with excellent tensile strength.

At a stage of manufacturing a nonwoven fabric, a polymer such as viscose, starch, and cationic polymer (e.g., polyamidepolyamine-epichlorohydrin) may be used for the purpose of improving the strength (e.g., tensile strength) of the nonwoven fabric. Such a polymer (which can be acknowledged as a strengthening agent for nonwoven fabrics) may be added at a papermaking stage of the nonwoven fabric (stage of concentrating the fibers), or may be applied or impregnated after the papermaking stage. A nonwoven fabric derived by using such a strengthening agent is suitable for constituting a PSA sheet with excellent tensile strength. Therefore, use of a nonwoven fabric formed with such a strengthening agent is particularly effective in e.g., a double-faced PSA sheet used for attachment to a recyclable component.

The substrate may contain various additives as necessary, such as a filler (inorganic filler, organic filler, etc.), an anti-aging agent, an antioxidant, an ultraviolet absorber, an antistatic agent, a lubricant, a plasticizer, and a colorant (pigment, dye, etc.) The surface of the substrate (in particular, the surface on the side to which the PSA layer is provided) may have a known or conventional surface treatment, such as corona discharge treatment, plasma treatment, or primer coating. Such a surface treatment may be, e.g., a treatment to improve an anchoring property of the PSA layer to the substrate.

The thickness of the substrate can be appropriately selected according to a purpose, and is about 10 $\mu$m or more, usually 20 $\mu$m or more, and preferably 30 $\mu$m or more (typically 40 $\mu$m or more, e.g., 50 $\mu$m or more). An increase in the thickness of the substrate tends to cause enhanced strength of the substrate and the PSA sheet, and improved handling properties (ease of processing) during manufacturing or use. The thickness is also about 800 $\mu$m or less, usually 450 $\mu$m or less, and preferably 300 $\mu$m or less (typically 150 $\mu$m or less, e.g., 100 $\mu$m or less). Limitation of the thickness of the substrate tends to cause improved conformability to a surface configuration (steps, etc.) of an adherend.

<Release Liner>

The release liner protecting and/or supporting the PSA layer (which may have both functions for protection and support) is not particularly limited for the material or configuration thereof, and a suitable one can be selected and used among known release liners. For example, a release liner with at least one surface of a substrate having release treatment (typically, provided with a release layer made of a release agent) can be preferably used. As the substrate constituting this type of release liner (substrate to be subjected to release treatment), an appropriate substrate can be selected and used among substrates similar to those listed above as a substrate constituting the PSA sheet (various types of plastic films, paper, fabrics, rubber sheets, foam sheets, metal foils, composites thereof, etc.). As the release agent forming the release layer, a known or conventional release agent (e.g., a silicone-based, fluorine-based, or long-chain alkyl-based release agent) can be used. Alternatively, a low-adhesion substrate formed of a fluorine-based polymer (e.g., polytetrafluoroethylene, polychlorotrifluoroethylene, polyvinyl fluoride, polyvinylidene fluoride, tetrafluoroethylene-hexafluoropropylene copolymer, or chlorofluoroethylene-vinylidene fluoride copolymer) or a low-polarity polymer (e.g., olefin-based resin such as polyethylene or polypropylene) may be used as the release liner without applying any release treatment to the surface of the substrate. Alternatively, such a low-polarity substrate may also be used as the release liner after release treatment to the surface.

The thicknesses of a substrate and a release layer constituting the release liner are not particularly limited and can be appropriately selected according to a purpose and other considerations. The overall thickness of the release liner (the overall thickness including a substrate and a release layer in a release liner having the release layer on the surface of the substrate) is, e.g., preferably 15 $\mu$m or more (typically about 15 $\mu$m to 500 $\mu$m) and more preferably about 25 $\mu$m to 500 $\mu$m.

<Method for Producing On-Substrate Double-Faced PSA sheet>

In preparing an on-substrate double-faced PSA sheet, no particular limitation is imposed on a method for providing a PSA layer to a first face and a second face of a substrate. Ordinarily, each of the first face and the second face is preferably applied with either method selected from the following: (1) a method of providing (typically applying) the water-dispersed PSA composition to a release liner and drying to form a PSA layer on the release liner, and then attaching to transfer (laminate) the PSA layer onto the substrate (hereinafter also referred to as "transfer method"); and (2) a method of directly providing (typically applying) the water-dispersed PSA composition to the substrate and then drying (hereinafter also referred to as "direct-application method" or "direct method"). For example, a double-faced PSA sheet may be produced by applying the transfer method to each face of the substrate (transfer/transfer method), or a double-faced PSA sheet may be produced by applying the transfer method to a first face (typically the face provided with a PSA layer at first) of the substrate and the direct-application method to a second face (transfer/direct method).

<Applications>

The PSA sheet disclosed herein may be likely to retain adhesive strength (peel strength) to an adherend, even if exposed to a hot and humid environment after attached to the adherend. With leveraging such properties, the PSA sheet disclosed herein can be preferably used in embodiments to be attached to various products that may be used in an environment demanding water resistance or moisture resistance or to members constituting these products, for purposes such as fixing, joining, shaping, decorating, protecting and supporting the products or members. In particular, the PSA sheet can be preferably used for fixing the products or members. Examples of the environment demanding water resistance or moisture resistance include an environment with greatly changing in temperature and humidity (e.g., wet areas in house, and outdoor areas that may be exposed to rain and wind). Examples of the products include home appliances, OA equipment, vehicles (e.g., automobiles), household appliances (including furniture), and portable devices.

Examples of home appliances include televisions (CRT, liquid crystal, plasma, organic EL, etc.), DVD players and other AV devices, microwave ovens, rice cookers, washing machines, washer dryers, vacuum cleaners, refrigerators, freezers, hot water pots, air conditioners, dishwashers, air cleaners, lighting equipment, clocks, thermometers, PDA (personal digital assistance) and fixed telephone sets. Examples of OA equipment include word processors, electronic dictionaries, desktop PCs, laptop PCs, CRT displays, liquid crystal displays, organic EL displays, printers, scanners, photocopiers, fax machines and multifunction systems having two or more functions thereof. Examples of vehicles include automobiles and trains. Examples of household appliances (including furniture) include bathtubs, vanity units, toilets, cupboards, bookshelves, tables, dressers and glass windows. Examples of portable devices include portable electronic devices such as mobile phones, smartphones, tablet PCs, laptop PCs, various wearable devices, digital cameras, digital video recorders, acoustic equipment (portable music players, IC recorders, etc.), calculators (pocket calculators, etc.), portable gaming devices, electronic dictionaries, electronic organizers, electronic books, in-vehicle information equipment, portable radios, portable televisions, portable printers, portable scanners and portable modems, as well as mechanical wrist watches and pocket watches, flashlights, and hand-held mirrors.

[Examples]

Several examples according to the present invention will now be described below, but is not intended to limit the present invention thereto. In the description below, "part" and "%" are based on weight unless otherwise specified.

<Example 1>

(Preparation of Acrylic Polymer A)

To a reaction vessel equipped with a thermometer, a stirrer, a nitrogen inlet, and a reflux condenser were added 0.09 part of a reactive surfactant (product name "AQUALON KH-1025", manufactured by DKS Co. Ltd.) and 67 parts of distilled water, and the whole was subjected to nitrogen purge at room temperature (25°C) for one hour with stirring. The mixture is then heated to 60°C, followed by addition of 0.10 part of a polymerization initiator (product name "VA-057", manufactured by FUJIFILM Wako Pure Chemical Corporation), and stirred for 5 minutes. To this, an emulsion of 85 parts of 2-ethylhexyl acrylate (2EHA), 13 parts of methyl acrylate (MA), 1.25 parts of acrylic acid (AA), 0.75 part of methacrylic acid (MAA), 0.025 part of *t*-dodecanethiol (chain transfer agent), 0.02 part of 3-methacryloxypropyltrimethoxysilane (product name "KBM-503", manufactured by Shin-Etsu Chemical Co., Ltd.), and 1.91 parts of a reactive surfactant (product name "AQUALON KH-1025", manufactured by DKS Co., Ltd.) in 33 parts of distilled water was added dropwise over 4 hours to undergo polymerization at 60°C. The reaction mixture was further allowed to cure at 70°C for one hour, followed by addition of 0.05 part of a polymerization initiator (product name VA-057 available from FUJIFILM Wako Pure Chemical Corporation), and allowed to cure for two more hours. The reaction mixture was cooled to room temperature and adjusted to pH 6 with 10% aqueous ammonia as a pH adjuster to prepare acrylic polymer A.

(Preparation of PSA Sheet)

Thirty parts of a polymerized rosin ester (product name "SUPER ESTER E-865NT", manufactured by Arakawa Chemical Industries, Ltd.; Ts 160°C) as a tackifier resin, 0.8 part of a thickener (product name "Aron B-500", manufactured by Toagosei Co., Ltd.), and 0.7 part of an aqueous 10% sodium hydroxide solution were added to 100 parts of solid contents of acrylic polymer A and stirred, followed by defoaming, and applied on a release liner so as to provide a dried thickness of 60 $\mu$m. The resultant was transferred to each face of a nonwoven fabric (product name "SP-14K", a pulp nonwoven fabric manufactured by Daifuku Paper MFG. Co., Ltd.; grammage 14 g/m$^2$) to provide a double-faced PSA sheet according to the Example.

<Examples 2 and 4>

The double-faced PSA sheets according to the Examples were obtained in the same procedure as Example 1 except for changing an additive amount of an aqueous 10% sodium hydroxide solution relative to 100 parts of solid contents of acrylic polymer A as shown in Table 1.

<Example 3>

The double-faced PSA sheet according to the Example was obtained in the same procedure as Example 1 except for using an aqueous 10% potassium hydroxide solution instead of an aqueous 10% sodium hydroxide solution.

<Example 5>

The double-faced PSA sheet according to the Example was obtained in the same procedure as Example 1 except for not adding an aqueous 10% sodium hydroxide solution.

[Content of Na Ions and/or K Ions]

About 100 mg of a PSA sheet as a sample was weighed in a Teflon® vessel, followed by addition of acid and sealing, then placed into a microwave digestion device (manufactured by CEM Corporation, product name "MARS5"), and irradiated with microwave to perform pressure acid digestion under a temperature condition of 220°C or less. Note that the PSA sheet includes a PSA layer and a substrate, but not a release liner. When the PSA sheet is a PSA sheet without substrate, the PSA sheet includes only a PSA layer. After pressure acid digestion of the PSA sheet, ultra-pure water was added up to 50 mL, and quantitative analysis was made for Na ions and/or K ions with inductively coupled plasma mass spectrometry (ICP-MS) using a device (manufactured by Agilent Technologies, Inc., product name "Agilent 7500cs"). The results are shown in corresponding fields in Table 1, where the weight of Na ions and/or K ions thus obtained is converted to the content of Na ions and/or K ions per 100 parts by weight of the PSA sheet. The calculation results of the total contents of Na ions and K ions are also shown in corresponding fields in Table 1.

[Peel Strength to SUS Plate]

(Initial Peel Strength S0)

The to-SUS plate peel strength of a PSA sheet of each Example was measured as below. The release liner covering one face of the PSA sheet (double-faced PSA sheet) was peeled off and 25 μm thick polyethylene terephthalate (PET) film was attached to back the PSA sheet. The backed PSA sheet was cut into 20 mm wide by 100 mm long in size to prepare a test piece. Under an environment at 23°C and 50% RH, the test piece was press-bonded with a 2 kg roller moved back and forth once to a stainless steel plate (SUS304BA plate) as an adherend. The resultant was stored under an environment at 23°C and 50% RH for 30 minutes, and the 180° peel strength (N/20 mm) was measured at a tensile speed of 300 mm/min using a tensile tester in accordance with JIS Z0237. Three measurements (i.e., N = 3) were taken and their average value was used as the initial peel strength S0 of the PSA sheet. The results are shown in corresponding fields in Table 1. In measuring a single-faced PSA sheet, the film backing can be omitted.

(Post-wet-heating Peel Strength Sw)

In the same manner as attachment of the test piece in the measurement of the initial peel strength S0, a test piece was press-bonded to a stainless steel plate (SUS304BA plate). The resultant was stored under wet-heating conditions of 60°C and 95% RH for 24 hours. The resultant was then transferred to an environment at 23°C and 50% RH, and then within 10 minute, the 180° peel strength (N/20mm) was determined in the same manner as the measurement of the initial peel strength S0 measurement. The average value of three measurements was defined as the post-wet-heating peel strength Sw of the PSA sheet. The retention rate (Sw/SO) was also calculated for the PSA sheet of each Example. The results are shown in corresponding fields in Table 1.

[Table 1]

Table 1

| | | Aqueous Solution Added | | Na+/K+ Content per 100 Parts of PSA Sheet [part] | | | Peel Strength [N/ 20mm] | | Retension Rate Sw/S0 [%] |
|---|---|---|---|---|---|---|---|---|---|
| | Type | Additive Amount to 100 Parts of Base Polymer [part] | | Na+ | K+ | Total | Initial S0 | After Wetheated Sw | |
| Ex. 1 | NaOH | 0.70 | | 0.40 | 0.00 | 0.40 | 16.8 | 11.2 | 67 |
| Ex. 2 | NaOH | 1.40 | | 0.70 | 0.00 | 0.70 | 16.9 | 15.4 | 91 |
| Ex. 3 | KOH | 0.70 | | 0.09 | 0.31 | 0.40 | 16.5 | 11.6 | 70 |
| Ex. 4 | NaOH | 0.35 | | 0.25 | 0.00 | 0.25 | 17.2 | 5.3 | 31 |
| Ex. 5 | - | - | | 0.09 | 0.00 | 0.09 | 16.0 | 4.0 | 25 |

As shown in Table 1, the PSA sheets in Examples 1-4 using a PSA composition having addition of an aqueous sodium hydroxide solution or an aqueous potassium hydroxide solution exhibited higher post-wet-heating peel strength Sw relative to that in Example 5 having addition of neither an aqueous sodium hydroxide solution nor an aqueous potassium hydroxide solution. Particularly, the PSA sheets in Examples 1-3, in which the total contents of Na ions and K ions per 100 parts by weight of the PSA sheet is a predetermined amount or more, exhibited clearly excellent post-wet-heating peel strength Sw and also higher retention rate (Sw/SO) relative to the PSA sheets in Examples 4 and 5. These results indicated that the PSA sheets in Examples 1-3 have particularly excellent water resistance.

Although specific embodiments of the present invention have been described in detail so far, these are merely for illustrations and do not limit the scope of the claims. The art recited in the claims includes various modifications and changes made to the specific embodiments illustrated above.

[Reference Signs List]

1    PSA sheet
11    first PSA layer
11A    first adhesive face
12    second PSA layer
12A    second adhesive face
15    substrate (support)
21    release liner

**Claims**

1.   A pressure-sensitive adhesive sheet comprising a pressure-sensitive adhesive layer formed from a water-dispersed pressure-sensitive adhesive composition,

wherein the water-dispersed pressure-sensitive adhesive composition comprises an acrylic polymer as a base polymer, a water-dispersed tackifier resin, and at least any one type of Na ions and K ions,
wherein the total amount of Na ions and K ions in the pressure-sensitive adhesive sheet is 0.3 part by weight or more to 0.8 part by weight or less per 100 parts by weight of the pressure-sensitive adhesive sheet.

2.   The pressure-sensitive adhesive sheet according to claim 1, wherein the acrylic polymer is a polymerization product of a monomeric starting material comprising more than 50% by weight of alkyl (meth)acrylate.

3.  The pressure-sensitive adhesive sheet according to claim 1 or 2, wherein the water-dispersed pressure-sensitive adhesive composition further comprises a surfactant.

4.  The pressure-sensitive adhesive sheet according to any one of claims 1 to 3, wherein the content of the water-dispersed tackifier resin is 1 part by weight or more to 70 parts by weight or less relative to 100 parts by weight of the base polymer.

5.  The pressure-sensitive adhesive sheet according to any one of claims 1 to 4, wherein the water-dispersed pressure-sensitive adhesive composition comprises a tackifier resin having a softening point of 90°C or higher as the water-dispersed tackifier resin.

6.  The pressure-sensitive adhesive sheet according to any one of claims 1 to 5, having a 180° peel strength of 4 N/20 mm or more after applied to a stainless steel plate and stored under conditions of 60°C and 95 % RH for 24 hours.

7.  The pressure-sensitive adhesive sheet according to any one of claims 1 to 6, wherein the 180° peel strength after attached to a stainless steel plate and stored under conditions of 60°C and 95% RH for 24 hours is 0.5 times or more of the 180° peel strength after attached to a stainless steel plate and stored under conditions of 23°C and 50% RH for 30 minutes.

8.  The pressure-sensitive adhesive sheet according to any one of claims 1 to 7, formed as an adhesively double-faced pressure-sensitive adhesive sheet comprising a substrate and, as the pressure-sensitive adhesive layers, a first pressure-sensitive adhesive layer placed on a first face of the substrate, and a second pressure-sensitive adhesive layer placed on a second face of the substrate.

9.  The pressure-sensitive adhesive sheet according to claim 8, wherein the substrate is a non-woven fabric.

[Fig. 1]

FIG.1

| | INTERNATIONAL SEARCH REPORT | International application No. |
|---|---|---|
| | | PCT/JP2021/008016 |

A.  CLASSIFICATION OF SUBJECT MATTER
C09J 7/38(2018.01)i; C09J 7/21(2018.01)i; C09J 11/04(2006.01)i; C09J
11/06(2006.01)i; C09J 133/06(2006.01)i
FI: C09J7/38; C09J133/06; C09J11/06; C09J11/04; C09J7/21
According to International Patent Classification (IPC) or to both national classification and IPC

B.  FIELDS SEARCHED

Minimum documentation searched (classification system followed by classification symbols)
C09J1/00-201/10

Documentation searched other than minimum documentation to the extent that such documents are included in the fields searched
Published examined utility model applications of Japan      1922-1996
Published unexamined utility model applications of Japan    1971-2021
Registered utility model specifications of Japan            1996-2021
Published registered utility model applications of Japan    1994-2021

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X | JP 2001-55550 A (NIPPON NSC LTD.) 27 February 2001 | 1-7 |
| Y | (2001-02-27) claims 1-3, paragraphs [0008]-[0009], [0016], [0018], [0021]-[0022], [0025], [0030]- [0036], [0048], table 1, example 1 | 6-9 |
| Y | JP 2011-16943 A (NITTO DENKO CORP.) 27 January 2011 (2011-01-27) claim 1, paragraphs [0031]- [0033], [0043]-[0045], table 2, example 1 | 6-9 |
| A | JP 2007-91966 A (AICA KOGYO CO., LTD.) 12 April 2007 (2007-04-12) claim 1, paragraphs [0015]- [0016], table 1, comparative example 3 | 1-9 |
| A | JP 2008-285221 A (NITTO DENKO CORP.) 27 November 2008 (2008-11-27) paragraph [0059] | 1-9 |

☐ Further documents are listed in the continuation of Box C.  ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 21 April 2021 (21.04.2021) | 11 May 2021 (11.05.2021) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**
Information on patent family members

| International application No. |
| --- |
| PCT/JP2021/008016 |

| Patent Documents referred in the Report | Publication Date | Patent Family | Publication Date |
| --- | --- | --- | --- |
| JP 2001-55550 A | 27 Feb. 2001 | WO 2001/014492 A1 claims 1-3, page 2, line 20 to page 5, line 17, page 9, line 24 to page 10, line 11, page 11, line 12 to page 12, line 8, working example 1, table 1, page 25, lines 1-13 AU 2807901 A | |
| JP 2011-16943 A | 27 Jan. 2011 | US 2011/0008605 A1 claim 1, paragraphs [0048]-[0051], example 1, table 2 EP 2272930 A1 CN 101948663 A | |
| JP 2007-91966 A | 12 Apr. 2007 | (Family: none) | |
| JP 2008-285221 A | 27 Nov. 2008 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020038907 A
- JP 2017132993 A

- JP 2007051271 A

**Non-patent literature cited in the description**

- **C. A. DAHLQUIST.** Adhesion: Fundamental and Practice. McLaren & Sons, 1966, 143

- Polymer Handbook. John Wiley & Sons, Inc, 1989